# EUROPEAN PATENT SPECIFICATION

(11) **EP 3 778 935 B1**
(45) Date of publication and mention of the grant of the patent: **24.01.2024**
(21) Application number: 19776875.7
(22) Date of filing: 20.03.2019
(51) Int. Cl.: C22B 1/242, B09B 3/20, B01J 2/10, B09B 5/00, C22B 7/02, C22B 1/16, C02F 11/121, C02F 11/12, C02F 11/122, C02F 103/16

(54) **METHOD FOR PRODUCING GRANULATED ARTICLE, METHOD FOR PRODUCING SINTERED ORE**
VERFAHREN ZUR HERSTELLUNG EINES GRANULIERTEN ARTIKELS, VERFAHREN ZUR HERSTELLUNG VON GESINTERTEM ERZ
PROCÉDÉ DE PRODUCTION D' UN ARTICLE GRANULÉ, PROCÉDÉ DE PRODUCTION DE MINERAI FRITTÉ

(30) Priority: 29.03.2018 JP 2018064037
(43) Date of publication of application: 17.02.2021
(73) Proprietor: JFE Steel Corporation, Tokyo 100-0011 (JP)
(72) Inventor: KUROIWA, Masato, Tokyo 100-0011 (JP); TAKEHARA, Kenta, Tokyo 100-0011 (JP); KOBAYASHI, Naoto, Tokyo 100-0011 (JP); YAMAMOTO, Tetsuya, Tokyo 100-0011 (JP); JINNO, Tetsuya, Tokyo 100-0011 (JP); HAYASAKA, Yasukazu, Tokyo 100-0011 (JP); ODA, Kazuki, Tokyo 100-0011 (JP)
(74) Representative: Grünecker Patent- und Rechtsanwälte PartG mbB
(86) International application number: PCT/JP2019/011724
(87) International publication number: WO 2019/188668

(56) References cited:
- WO-A1-2013/140810
- AU-A1- 2013 236 700
- JP-A- S4 938 811
- JP-A- S5 521 581
- JP-A- S5 521 581
- JP-A- 2008 189 970
- JP-A- 2012 097 299
- JP-A- 2015 014 015
- JP-A- 2015 014 015
- JP-B2- 4 112 827
- JP-B2- 5 602 586
- Bogdandy ET AL: "The Reduction of Iron Ores", , 31 December 1971 (1971-12-31), XP055751535, Retrieved from the Internet: URL:http://link.springer.com/content/pdf/b fm%3A978-3-662-10400-2%2F1.pdf [retrieved on 2020-11-17]

## Description

### Technical Field

The present invention relates to a granulated material including sludge generated in an iron-making process, the granulated material having improved conveyor transportability. The present invention also relates to a method for producing the granulated material and further relates to a method for producing sintered ore by using the granulated material.

### Background Art

Various iron-making processes, such as pig iron making, steel making, and rolling, generate large amounts of dust and sludge. The dust and sludge have high iron and carbon contents, and, therefore, it is preferable that the dust and sludge be recycled as an iron source and a heat source instead of being discarded. Typically, the dust and sludge are used in high-temperature processes in pig iron making and steel making. The dust and sludge are recycled as an iron source by being remelted and dissolved into molten pig iron in high-temperature processes.

The dust is a fine powder that contains iron and has a moisture content of 0 to 20 mass%, or in many cases, a moisture content of 0 to 5 mass%. Since the dust has a low moisture content, when the dust is transported on a belt conveyor, dust emission occurs. The sludge is a fine powder that contains iron and has a moisture content of greater than or equal to 20 mass%. Since the sludge has a high moisture content and therefore has a high adhesion property, when the sludge is transported on a belt conveyor, adhesion to a conveyor junction occurs, which causes clogging. Fine powders have an average particle diameter of less than or equal to 0.5 mm and, therefore, pose particularly significant problems associated with adhesion and dust emission. As described, when the dust and sludge are transported on a belt conveyor, clogging due to adhesion and/or dust emission occurs. In the process of transportation, while dust emission is a problem that can be mitigated by providing dust collection equipment, sludge adhesion is a particularly significant problem.

In connection with such a problem, Patent Literature 1 discloses a method for producing a granulated material. The method uses a granulated material production apparatus that includes a stirring impeller, which revolves within a drum, and a stirring rotor, which revolves with the stirring impeller and rotates. With the apparatus, sludge resulting from iron making and in the form of a cake is crushed, and after a solidifying agent and dust resulting from iron making are added thereto, a granulation process is performed. According to the disclosure, using the method enables proper granulation to be achieved without performing a particular drying process, to form a granulated material suitable for use in a high-temperature process.

Patent Literature 2 discloses a method of granulating a sinter feed material. In the method, coke breeze and coarse grains are mixed with dust and/or sludge, and the mixture is granulated in a vibration kneading granulator, and, in addition, exterior coating granulation is performed to apply coke breeze.

Patent Literature 3 discloses a method for holding sludge in a recessed portion of sintered ore, which is achieved by ensuring that a mixture in which fine-particle sintered ore is mixed with water-containing sludge has a moisture content within a range of 3 to 15%. JP 5 602586 B2 discloses a method of producing a granulated material.

### Citation List

### Patent Literature

PTL 1: Japanese Unexamined Patent Application Publication No. 2012-97295
PTL 2: International Publication No. 2007/63603
PTL 3: Japanese Unexamined Patent Application Publication No. 49-38811

### Summary of Invention

### Technical Problem

However, since the granulated material disclosed in Patent Literature 1 has a high moisture content, transporting the granulated material on a belt conveyor results in a large amount of adhesion of the granulated material to a conveyor junction. In particular, in ironworks, a belt conveyor is installed outdoors, and, therefore, in rainy weather, rain also falls on the belt conveyor. Thus, there was a problem in that, in rainy weather, the granulated material had an increased moisture content, which increased the amount of adhesion of the granulated material to a conveyor junction, and, consequently, the adhesion resulted in clogging due to the granulated material.

In Patent Literature 2, the moisture content of sludge was not considered, and, therefore, there was a problem in that adhesion of the granulated material during transportation could not be overcome by the method. In the method of Patent Literature 3, sludge is adhered to sintered ore, which reduces an impediment to transportation associated with a transportation process. However, the method of Patent Literature 3 does not include a step of granulation and is, therefore, subject to the requirement that the moisture content after mixing be 3 to 15%. Accordingly, there was a problem in that if the amount of mixed sludge was greater than or equal to 30 mass%, favorable results could not be obtained, and, therefore, the method had a narrow range of applications.

The present invention has been made in view of the problems with the related art technologies, and an object of the present invention is to provide a granulated material that enables a reduction in the amount of adhesion of the granulated material to a conveyor junction.

### Solution to Problem

The invention is defined in the appended claims.

### Advantageous Effects of Invention

Using a granulated material of the present invention enables a reduction in the amount of adhesion of the granulated material to a conveyor junction. As a result, the occurrence of clogging due to the granulated material during transportation on a belt conveyor is controlled.

### Brief Description of Drawings

[Fig. 1] Fig. 1 presents an enlarged photograph of a cross section of a granulated material 10.
[Fig. 2] Fig. 2 is an internal perspective view of a stirring device 30, which is used in the production of a granulated material according to the present embodiment.
[Fig. 3] Fig. 3 is a plan view of the stirring device 30.
[Fig. 4] Fig. 4 is a side view of an adhesion property evaluation device 50.
[Fig. 5] Fig. 5 is a graph illustrating the results of an evaluation of an amount of adhesion.
[Fig. 6] Fig. 6 is a graph illustrating the results of an evaluation of the amount of adhesion.

### Description of Embodiments

The present invention will now be described with reference to an embodiment of the invention. According to the present embodiment, a granulated material includes sludge in an amount of greater than 30 mass% and 90 mass% or less and sintered ore powder in an amount of 10 mass% or greater and less than 70 mass%. The sludge is sludge generated in an iron-making process. The granulated material is a material granulated to include granulated particles in which at least a portion of the sludge adheres to at least a portion of the sintered ore powder. The granulated material may include dust generated in an iron-making process.

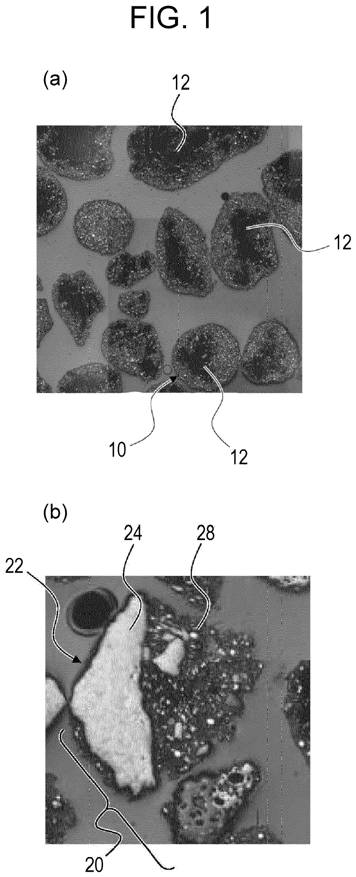

Fig. 1 presents enlarged photographs of cross sections of granulated materials. Fig. 1(a) is an enlarged photograph of a cross section of a granulated material 10, according to the related art, and Fig. 1(b) is an enlarged photograph of a cross section of a granulated material 20, according to the present embodiment. The granulated material 10 according to the related art is a granulated material obtained by granulating a granulation feed material in a drum-type granulator, the granulation feed material including sludge generated in an iron-making process. The granulated material 20 according to the present embodiment is a granulated material obtained by granulating a granulation feed material that includes sludge generated in an iron-making process and sintered ore powder.

As shown in Fig. 1(a), a black region was observed in a middle of the granulated material 10 of the related art. The black region is a void 12, which occurred as follows. For microscopic observation, the granulated material 10 was embedded in a resin, and thereafter, when the granulated material 10 was polished for cross section observation, a middle of the granulated material 10 fell off, leaving the void 12. It is believed that the granulated material 10 of the related art has a weak portion, which has a high moisture content, in the middle, and as a result of the polishing, the portion fell off, leaving the void 12 in the middle of the granulated material 10.

The granulated material 10, which has such a weak portion in a middle, easily breaks when an impact occurs during transportation on a belt conveyor, and as a result, fine powder is generated, and moisture inside is released. The generation of fine powder and the release of moisture from the granulated material 10 increases the amount of adhesion of the granulated material 10 to a conveyor junction.

As shown in Fig. 1(b), the granulated material 20 according to the present embodiment includes granulated particles 22, in which sludge 28 adheres to sintered ore powder 24 in a manner such that the sludge 28 coats the sintered ore powder 24. The sintered ore powder 24 has pores and has a low moisture content because, in the process of producing the sintered ore, the hot sintered ore is cooled with gas. Accordingly, when a granulation feed material including the sintered ore powder 24 and the sludge 28 is granulated, the sintered ore powder 24 serves as a core to form the granulated particles 22 while moisture in the sludge 28 is absorbed by the sintered ore powder 24. As a result, a weak portion that has a high moisture content and therefore has low strength is not formed in a middle of the granulated particles 22. Accordingly, the granulated particles 22 do not break even when subjected to an impact during transportation on a belt conveyor. Even if the granulated particle 22 breaks, moisture is not released. As described, the granulated material 20 according to the present embodiment includes the granulated particles 22, which are unlikely to yield fine powder and do not release a large amount of moisture, which can be a cause of adhesion, and, therefore, the adhesion of the granulated material 20 to a conveyor junction that occurs during transportation on a belt conveyor is reduced compared with that of the granulated material 10 of the related art.

In the granulated material 20 according to the present embodiment, a content of the sintered ore powder 24 needs to be greater than or equal to 10 mass%. When the granulated material 20 includes the sintered ore powder 24 in an amount greater than or equal to 10 mass%, the amount of adhesion of the granulated material 20 to a conveyor junction is reduced. The content of the sintered ore powder 24 is more preferably greater than or equal to 25 mass% and even more preferably greater than or equal to 50 mass%. As the content of the sintered ore powder 24 increases, the amount of adhesion to a conveyor junction decreases, until the content reaches 50 mass%. When the content of the sintered ore powder 24 is 50 mass%, the amount of adhesion to a conveyor junction is substantially 0. Accordingly, further increasing the content of the sintered ore powder 24 produces no further effect of reducing the amount of adhesion to a conveyor junction and results in a reduction in the amount of processing of the sludge 28. Accordingly, the upper limit of the content of the sintered ore powder 24 is set to be less than 70 mass% from the standpoint of reducing the amount of adhesion to a conveyor junction. However, from the standpoint of increasing the amount of processing of the sludge 28, it is preferable that the content of the sintered ore powder 24 be less than or equal to 50 mass%. In the granulated material according to the present embodiment, the content of the sludge 28 is greater than 30 mass% and 90 mass% or less, which corresponds to the content of the sintered ore powder 24.

A method for producing the granulated material 20, according to the present embodiment, will now be described. First, a dewatering step is carried out in which the sludge 28, which has been generated in an iron-making process, is dewatered into a dewatered cake by using a press-type dewatering apparatus. Next, a granulation step is carried out in which the dewatered cake and the sintered ore powder 24 are mixed and granulated together in a stirring device. In the present embodiment, the masses of the raw materials to be fed to a granulator are all the masses of the raw materials including the moisture content. In the process, dust generated in an iron-making process may be added, and the raw materials may be mixed and granulated together. In this manner, the granulated material according to the present embodiment is produced. Examples of the press-type dewatering apparatus include filter presses and vacuum filters. Any dewatering apparatus, other than a press-type dewatering apparatus, may be used without limitation provided that the sludge can be dewatered to a state suitable for feeding to a stirring device. It is required that the dewatered sludge has a moisture content of 20 to 40 mass%. It is more preferable that the degree of dewatering of the sludge be increased so that the moisture content of the sludge (dewatered cake) can be 20 mass% or greater and less than 30 mass%. With such a moisture content, sludge processing efficiency and granulability can be enhanced.

The sludge used in the present embodiment is sludge generated in an iron-making process, such as a pig-iron-making step, a steel-making step, a rolling step, a coating step, or a pickling step. Before being dewatered, sludge has a high moisture content. The moisture content is approximately 40 to 70 mass%.

The granulated material 20 according to the present embodiment may include dust. The dust used in the production of the granulated material 20 is dust generated in an iron-making process, such as a pig-iron-making step, a sinter production step, or a steel-making step. The dust is collected by using a method such as dry dust collection and has a low moisture content. The moisture content is approximately 0 to 20 mass% or, in many cases, approximately 0 to 5 mass%.

The sintered ore powder used in the present embodiment is sintered ore having particle diameters of less than or equal to 5 mm, which is obtained from sieving in a sintered ore production process or transportation process or in a charging process for charging sintered ore into a blast furnace; the sintered ore powder is sintered ore powder that has passed through a sieve having a sieve opening of 5 mm. Sintered ore, which is produced by sintering, has a low moisture content. The moisture content is 0 mass% or greater and 5 mass% or less. For the production of the granulated material 20 in which sludge coats sintered ore powder that serves as a core, it is preferable that the sintered ore powder have particle diameters of greater than or equal to 2 mm. Sintered ore powder having particle diameters of less than or equal to 5 mm, which has passed through a sieve having a sieve opening of 5 mm, contains a large number of particles having a particle diameter of 0.1 to 5 mm, and, therefore, it is not necessary to laboriously remove fine powder having particle diameters of less than or equal to 2 mm. The particle diameters of the sintered ore powder may be controlled such that the sintered ore powder has an average particle diameter of greater than or equal to 2 mm, to ensure that sintered ore powder having a certain degree of sizes is included.

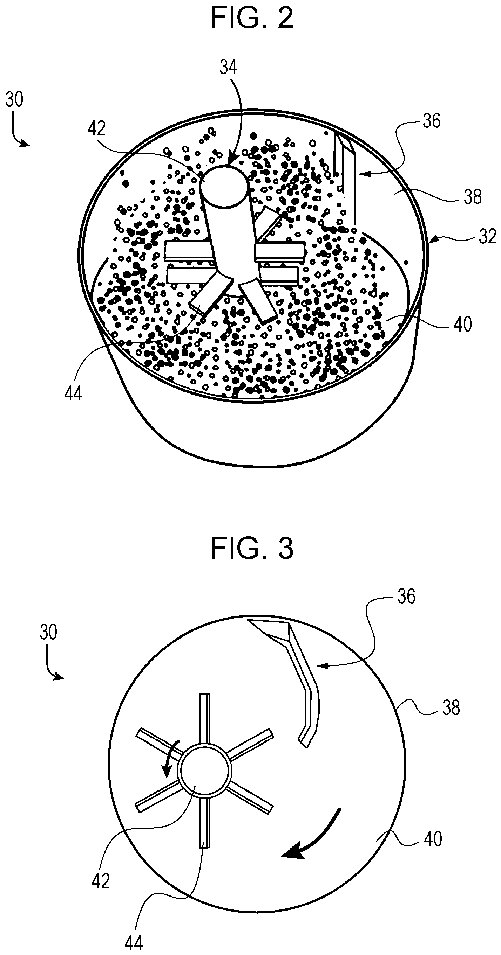

Fig. 2 is an internal perspective view of a stirring device 30, which is used in the production of a granulated material 20 according to the present embodiment. Fig. 3 is a plan view of the stirring device 30. The stirring device 30 is a device for finely crushing a dewatered cake resulting from dewatering of the sludge 28, mixing the sintered ore powder 24 with the finely crushed dewatered cake, optionally adding and mixing dust therewith, and granulating the mixture.

The stirring device 30 includes a cylindrical vessel 32, into which a dewatered cake and/or dust are to be loaded, a stirring impeller 34, and a weir 36. Providing the weir 36 is preferable for the purpose of scraping the granulation feed material; however, the weir 36 may not be provided. The cylindrical vessel 32 includes a cylinder 38 and a bottom plate 40, which has a circular shape. The cylindrical vessel 32 has an opening (not illustrated) provided for the feeding and discharging of a dewatered cake and/or dust. The bottom plate 40 is provided integrally with the cylinder 38. The bottom plate 40 rotates with the cylinder 38 upon receiving a driving force. The cylindrical vessel 32 may include a top plate that seals an upper side of the cylindrical vessel 32.

The stirring impeller 34 includes a rotatable shaft 42 and a plurality of stirring blades 44. The rotatable shaft 42 is provided at a position offset from a center of the cylindrical vessel 32. The stirring impeller 34 rotates upon receiving a driving force from a drive unit (not illustrated) provided above the cylindrical vessel 32. Thus, the cylindrical vessel 32 and the stirring impeller 34 rotate upon receiving driving forces from different respective drive units, that is, rotate independently of each other. The rotatable shaft 42 may be provided at the center of the cylindrical vessel 32.

The stirring blades 44 are provided to project radially outwardly from the rotatable shaft 42. At two locations of the rotatable shaft 42 with respect to a vertical direction thereof, the stirring blades 44 are provided at intervals of 60°, in six directions. The locations with respect to a vertical direction at which the stirring blades 44 are to be provided and the number of the stirring blades 44 may be appropriately varied in accordance with the amounts of the dewatered cake and dust to be filled into the cylindrical vessel 32.

In a state in which a dewatered cake is loaded in the cylindrical vessel 32, the bottom plate 40 rotates clockwise, and the stirring impeller 34 rotates counterclockwise, for example. The clockwise rotation of the bottom plate 40 causes the dewatered cake loaded in the cylindrical vessel 32 to rotate clockwise along the direction of rotation of the bottom plate 40. The dewatered cake rotated clockwise collides with the stirring impeller 34, which rotates counterclockwise, and is crushed accordingly. The directions of rotation of the bottom plate 40 and the stirring impeller 34 may be clockwise or counterclockwise. The directions of rotation of the bottom plate 40 and the stirring impeller 34 may be different from or identical to each other.

In the example illustrated in Fig. 2 and Fig. 3, the stirring device 30 is horizontally installed. However, the stirring device 30 may be used in an inclined state with respect to a horizontal plane. The stirring device 30 may be used in a state in which the stirring impeller 34 remains rotatably supported in a vertical direction, and the cylindrical vessel 32 alone is inclined with respect to the horizontal plane.

With the use of the stirring device 30 illustrated in Fig. 2 and Fig. 3, the dewatered cake is finely crushed, and the crushed dewatered cake and the sintered ore powder 24 are mixed together. Accordingly, moisture present in the dewatered cake is efficiently absorbed by the sintered ore powder 24, and thus the granulated material 20, which includes the granulated particles 22 in which the sludge 28 adheres to the sintered ore powder 24, can be produced. Since dust has a lower moisture content than sludge, the addition of dust improves granulability in many cases. Accordingly, in a case where it is required to recycle dust generated in an iron-making process, it is preferable to granulate the dust together with sludge and sintered ore.

In the stirring device illustrated in Fig. 2 and Fig. 3, the stirring impeller 34 is included. This feature is necessary from the standpoint of efficiently forming the granulated material 20. In addition, the cylindrical vessel 32 and the stirring impeller 34 rotate independently of each other. This feature is also preferable from the standpoint of efficiently forming the granulated material 20. In addition, the directions of rotation of the stirring impeller 34 and the bottom plate 40 are opposite to each other, and the stirring impeller 34 includes a rotatable shaft at a position offset from a center of the bottom plate 40. These features are also preferable from the standpoint of efficiently forming the granulated material 20.

The granulated material 20 according to the present embodiment can be used in the production of sintered ore. For example, sintered ore is produced as follows. In a combining step in which an iron-containing raw material, a CaO-containing raw material, and solid fuel are combined to form a sinter feed material, the granulated material 20 according to the present embodiment is combined. In a granulation step, water is added to granulate the sinter feed material. In a sintering step, a granulated form of the sinter feed material is sintered in a sintering machine.

Instead of combining the granulated material 20 according to the present embodiment in the combining step, the granulated material 20 according to the present embodiment may be combined at a later time in the granulation step so that an outer layer of the granulated form of the sinter feed material can be formed of the granulated material 20 according to the present embodiment. As described, the granulated material 20 according to the present embodiment can be used in the production of sintered ore and can be recycled as an iron source and a heat source in the production of sintered ore.

### EXAMPLES

Examples will now be described. In the examples, granulated material 20 according to the present embodiment were produced, and transportation properties of the granulated materials were evaluated. To produce the granulated material 20 according to the present embodiment, two different granulation methods were used for the production of the granulated materials. In one of the granulation methods, granulated materials were produced by using an intensive mixer Type R02, manufactured by Eirich, which has the same configuration as the stirring device 30, illustrated in Fig. 2. In the other of the granulation methods, granulated materials were produced by using a drum-type granulator. First, a dewatered cake obtained by dewatering sludge and having a moisture content of 25 mass% and dust having a moisture content of 5 mass% were loaded at a mass ratio of 4:1 into each of the devices. Then, a predetermined amount of sintered ore powder having a moisture content of 1.5 mass% was added thereto. Thus, the granulated materials were produced. Table 1 shows the components of the dust, sludge, and sintered ore powder used in a test. Table 2 shows the production conditions for the granulated materials. In Table 1, "T-Fe" is an abbreviation for total Fe and indicates a mass proportion of the iron atoms present in the dust or the sludge. In Table 1, the sum of the contents of the components of the dust or the sludge does not equal 100. This is because other components not listed in the table, such as CaO, were present. In Table 2, "Peripheral speed of stirring impeller" is a peripheral speed of a tip portion of the impeller, and "Rotational speed of vessel" is a rotational speed per minute of the cylindrical vessel 32, the direction of rotation being opposite to that of the stirring impeller.

**[Table 1]**

| | T-Fe | SiO₂ | Al₂O₃ | C | Metal Fe |
|---|---|---|---|---|---|
| Dust | 31.9 | 6.7 | 3.3 | 13.2 | 0.3 |
| Sludge | 60.5 | 1.6 | 0.6 | 10 . | 31.9 |
| Sintered ore powder | 57.0 | 5.5 | 1.8 | 0.2 | 0.0 |

| | | | | | |
|---|---|---|---|---|---|
| Unit: mass% | | | | | |

**[Table 2]**

| Granulation method | Stirring device | Drum-type |
|---|---|---|
| Granulation time (sec) | 60 | 60 |
| Peripheral speed of stirring impeller (m/sec) | 6.3 | N/A |
| Rotational speed of vessel (rpm) | 50 | 20 |

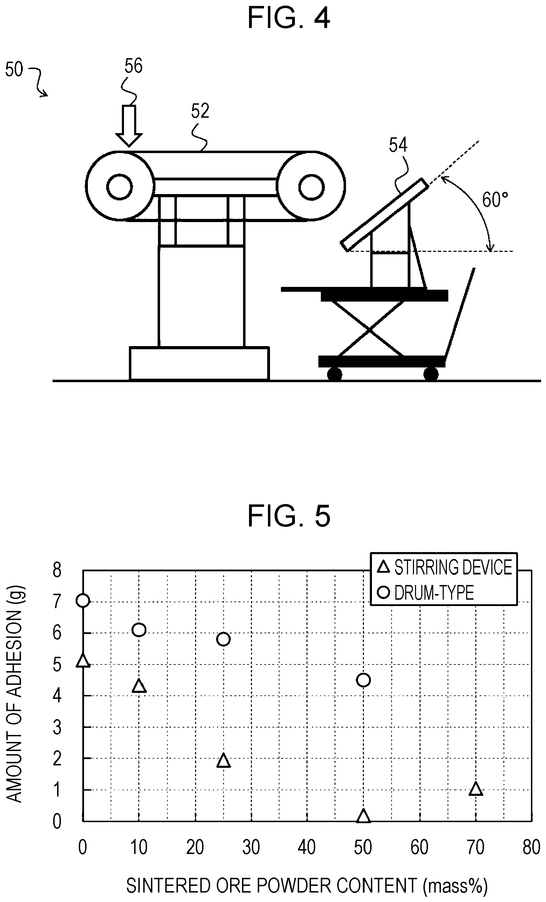

An adhesion property of the granulated materials produced as described above was evaluated. Fig. 4 is a side view of an adhesion property evaluation device 50. The adhesion property evaluation device 50 is a device that includes a belt conveyor 52 and a chute 54. The chute 54 was provided to simulate a conveyor junction. An evaluation of an amount of adhesion of each of the granulated materials was made as follows. 8 kg of the granulated material was loaded into the adhesion property evaluation device 50 from a position indicated by an arrow 56, and then the granulated material was transported on the belt conveyor 52 and was dropped onto the chute 54. The amount of adhesion, that is, adhesion to the chute 54, was measured. The amount of loading of the granulated material and the speed of the belt conveyor 52 were adjusted such that the rate at which the granulated material was transported was 0.8 kg/sec. The amount of adhesion was evaluated by conducting the same test four times and using the sum of the amounts of adhesion.

Fig. 5 is a graph illustrating the results of the evaluation of the amount of adhesion. In Fig. 5, the horizontal axis represents the content of the sintered ore powder (the mass percentage relative to the total mass of the materials loaded into the device), and the vertical axis represents the amount (g) of adhesion to the chute 54. The triangle plot points represent the results of the evaluation of the adhesion property of the granulated materials produced by using the intensive mixer. The circle plot points represent the results of the evaluation of the adhesion property of the granulated materials produced by using the drum-type granulator.

As shown in Fig. 5, regarding the granulated materials produced by using the intensive mixer, when the content of the sintered ore powder was 10 mass%, the amount of adhesion to the chute 54 was reduced compared with that of the granulated material containing no sintered ore powder. Furthermore, when the content of the sintered ore powder was 25 mass%, the amount of adhesion to the chute 54 was reduced compared with that of the granulated material having a sintered ore powder content of 10 mass%.

In the evaluation of the granulated material having a sintered ore powder content of 50 mass%, it was found that the amount of adhesion to the chute 54 was substantially 0. Thus, even when the content of the sintered ore powder was 70 mass%, the result was that the amount of adhesion to the chute 54 was not reduced while the amount of processing of dust and sludge was reduced. These results indicate that the content of the sintered ore powder is preferably greater than or equal to 10 mass%, more preferably greater than or equal to 25 mass%, and even more preferably greater than or equal to 50 mass%. With such a content, the amount of adhesion to the chute 54 during transportation on the belt conveyor can be reduced. A similar experiment was conducted; in the experiment, however, no dust was added, and a dewatered cake and sintered ore powder were used at a ratio of 1:1 (sintered ore powder content = 50 mass%). The result was that the amount of adhesion was 1.5 g. Thus, it was confirmed that a reduction in the amount of adhesion to the chute 54 could also be achieved under conditions in which no dust was added. The adhesion property of a granulated material was measured; the granulated material included sludge in an amount of 75 mass% and sintered ore powder in an amount of 25%, and the sludge had been dewatered to have a moisture content of 21 mass%. The amount of adhesion was 2.1 g, and thus it was confirmed that a reduction in the amount of adhesion was also achieved under this condition.

Also, regarding the granulated materials produced by using the drum-type granulator, when the content of the sintered ore powder was 10 mass%, the amount of adhesion to the chute 54 was reduced compared with that of the granulated material containing no sintered ore powder. Furthermore, when the content of the sintered ore powder was 25 mass%, the amount of adhesion to the chute 54 was reduced compared with that of the granulated material having a sintered ore powder content of 10 mass%.

However, drum-type granulators have a lower stirring capability than intensive mixers and, therefore, cannot crush dewatered cakes as much as intensive mixers can. Thus, presumably, in the case where the drum-type granulator was used to produce a granulated material, a greater number of granulated materials having a weak portion in a middle were produced, the weak portion being a portion having a high moisture content, than in the case where the intensive mixer was used to produce a granulated material; consequently, the amount of adhesion to the chute 54 was increased.

Now, the results of a confirmation will be described regarding a relationship between the rotational speed and rotation time of the stirring impeller of the intensive mixer and the amount of adhesion. A dewatered cake obtained by dewatering sludge, which was the same as the sludge shown in Table 1, and having a moisture content of 25 mass%, dust having a moisture content of 5 mass%, and sintered ore powder having a moisture content of 1.5 mass% were loaded into an intensive mixer at a mass ratio of 12:3:5 (sludge: 60 mass%, dust: 15 mass%, and the sintered ore powder: 25 mass%). Then, granulated materials were produced by employing various rotational speeds and various rotation times. The adhesion property of the granulated materials produced as described above was evaluated by using the adhesion property evaluation device 50, illustrated in Fig. 4. In this test, too, the amount of adhesion was evaluated by conducting the same test four times and using the sum of the amounts of adhesion.

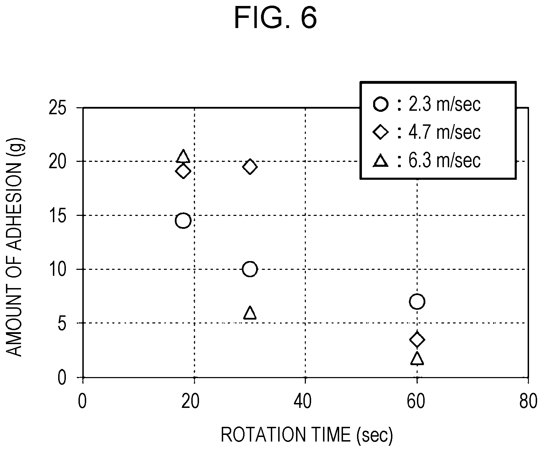

Fig. 6 is a graph illustrating the results of the evaluation of the amount of adhesion. In Fig. 6, the horizontal axis represents the rotation time (sec) of the stirring impeller, that is, the granulation time, and the vertical axis represents the amount (g) of adhesion to the chute 54. The circle plot points represent the results with the granulated materials produced by setting the peripheral speed of the tip portion of the stirring impeller to be 2.3 m/sec. The diamond plot points represent the results with the granulated materials produced by setting the peripheral speed of the tip portion of the stirring impeller to be 4.7 m/sec. The triangle plot points represent the results with the granulated materials produced by setting the peripheral speed of the tip portion of the stirring impeller to be 6.3 m/sec.

As shown in Fig. 6, it was observed that the amount of adhesion to the chute 54 tended to decrease as the rotation time of the stirring impeller was extended, regardless of the peripheral speed of the tip portion of the stirring impeller. It was observed that the amount of adhesion to the chute 54 tended to decrease as the peripheral speed of the tip portion of the stirring impeller was increased. From these results, it is believed that extended rotation times of the stirring impeller or increased peripheral speeds thereof resulted in increased amounts of the crushed dewatered cake, and as a result, the number of granulated materials having a weak portion in a middle was reduced, the weak portion being a portion having a high moisture content, and granulated particles in which the dust and sludge adhered to the sintered ore powder increased; consequently, the amount of adhesion to the chute 54 was reduced. In a comparison associated with the condition of the peripheral speed of the stirring impeller of 6.3 m/sec, it is found that a preferred rotation time (granulation time) is greater than or equal to 30 sec. On the other hand, longer granulation times result in reduced performance of the stirring device. Accordingly, in terms of performance, it is preferable that the rotation time (granulation time) be less than or equal to 180 sec. Based on the results with 60 sec, which is considered to be a sufficient rotation time, a preferred peripheral speed of the stirring impeller is greater than or equal to 4.7 m/sec.

### Reference Signs List

- 10: Granulated material
- 12: Void
- 20: Granulated material
- 22: Granulated particle
- 24: Sintered ore powder
- 28: Sludge
- 30: Stirring device
- 32: Cylindrical vessel
- 34: Stirring impeller
- 36: Weir
- 38: Cylinder
- 40: Bottom plate
- 42: Rotatable shaft
- 44: Stirring blade
- 50: Adhesion property evaluation device
- 52: Belt conveyor
- 54: Chute
- 56: Arrow

## Claims

1. A method for producing a granulated material,
the granulated material comprising:
sludge having a moisture content of 20 to 40 mass% in an amount of greater than 30 mass% and 90 mass% or less; and
sintered ore powder, which has passed through a sieve having a sieve opening of 5 mm, having a moisture content of 0 mass% or greater and 5 mass% or less in an amount of 10 mass% or greater and less than 70 mass%,
the granulated material including granulated particles in which at least a portion of the sludge adheres to at least a portion of the sintered ore powder,
the method comprising:
a dewatering step of dewatering sludge into a dewatered cake having a moisture content of 20 to 40 mass%; and
a granulation step of mixing and granulating the dewatered cake and sintered ore powder having a moisture content of 0 mass% or greater and 5 mass% or less together in a cylindrical stirring device (30) with a stirring impeller (34).

2. The method for producing a granulated material according to Claim 1, wherein, in the granulation step, dust, which is a fine powder having an average particle diameter of less than or equal 0.5mm,
containing iron and having a moisture content of 0 to 20 mass% is additionally mixed.

3. The method for producing a granulated material according to Claim 1 or 2, wherein the dewatered cake has a moisture content of 20 mass% or greater and less than 30 mass%.

4. A method for producing sintered ore, the method comprising:
a combining step of combining a granulated material produced by using the method for producing a granulated material according to any one of Claims 1 to 3, an iron-containing raw material, a CaO-containing raw material, and solid fuel to form a sinter feed material;
a granulation step of adding water to the sinter feed material and granulating the sinter feed material; and
a sintering step of sintering a granulated form of the sinter feed material in a sintering machine to form sintered ore.

## Patentansprüche

1. Verfahren zur Herstellung eines granulierten Materials,
wobei das granulierte Material, aufweist:
Schlamm mit einem Feuchtigkeitsgehalt von 20 bis 40 Massen-% in einer Menge von mehr als 30 Massen-% und 90 Massen-% oder weniger; und
gesintertes Erzpulver das durch ein Sieb mit einer Sieböffnung von 5 mm passiert ist, mit einem Feuchtigkeitsgehalt von 0 Masse-% oder mehr und 5 Masse-% oder weniger in einer Menge von 10 Masse-% oder mehr und weniger als 70 Masse-%,
wobei das granulierte Material granulierte Partikel enthält, in denen mindestens ein Teil des Schlamms an mindestens einem Teil des gesinterten Erzpulvers haftet,
wobei das Verfahren Folgendes aufweist:
einen Entwässerungsschritt zum Entwässern von Schlamm zu einem entwässerten Kuchen mit einem Feuchtigkeitsgehalt von 20 bis 40 Masse-%; und
einen Granulierungsschritt zum Mischen und Granulieren des entwässerten Kuchens und des gesinterten Erzpulvers mit einem Feuchtigkeitsgehalt von 0 Masse-% oder mehr und 5 Masse-% oder weniger zusammen in einem zylindrischen Rührgerät (30) mit einem Rührpropeller (34).

2. Das Verfahren zur Herstellung eines granulierten Materials nach Anspruch 1, wobei im Granulierungsschritt zusätzlich Staub, der ein feines Pulver mit einem durchschnittlichen Partikeldurchmesser von weniger als oder gleich 0,5 mm ist, aufweisend Eisen und einen Feuchtigkeitsgehalt von 0 bis 20 Masse-% hat, beigemischt wird.

3. Das Verfahren zur Herstellung eines granulierten Materials nach Anspruch 1 oder 2, wobei der entwässerte Kuchen einen Feuchtigkeitsgehalt von 20 Massen-% oder mehr und weniger als 30 Massen-% aufweist.

4. Verfahren zur Herstellung von gesintertem Erz, wobei das Verfahren Folgendes umfasst:
einen Kombinationsschritt zum Kombinieren eines granulierten Materials, das unter Verwendung des Verfahrens zur Herstellung eines granulierten Materials nach einem der Ansprüche 1 bis 3 hergestellt wurde, eines eisenhaltigen Rohmaterials, eines CaO-haltigen Rohmaterials und eines festen Brennstoffs, um ein Sinterbeschickungsmaterial zu bilden;
einen Granulierungsschritt, bei dem dem Sinterbeschickungsmaterial Wasser zugesetzt wird und das Sinterbeschickungsmaterial granuliert wird; und
einen Sinterschritt zum Sintern einer granulierten Form des Sinterbeschickungsmaterials in einer Sintermaschine, um gesintertes Erz zu bilden.

## Revendications

1. Procédé pour produire un matériau granulé,
le matériau granulé comprenant :
une boue ayant une teneur en humidité de 20 à 40 % en masse selon une quantité supérieure à 30 % en masse et de 90 % en masse ou moins ; et
une poudre de minerai fritté, qui a été passée à travers un tamis ayant une ouverture de tamis de 5 mm, ayant une teneur en humidité de 0 % en masse ou plus et de 5 % en masse ou moins selon une quantité de 10 % en masse ou plus et de moins de 70 % en masse,
le matériau granulé comportant des particules granulées dans lesquelles au moins une partie de la boue adhère à au moins une partie de la poudre de minerai fritté,
le procédé comprenant :
une étape de déshydratation consistant à déshydrater la boue en un gâteau déshydraté ayant une teneur en humidité de 20 à 40 % en masse ; et
une étape de granulation consistant à mélanger et granuler le gâteau déshydraté et la poudre de minerai fritté ayant une teneur en humidité de 0 % en masse ou plus et de 5 % en masse ou moins ensemble dans un dispositif cylindrique d'agitation (30) ayant une turbine d'agitation (34).

2. Procédé de production d'un matériau granulé selon la revendication 1, dans lequel, lors de l'étape de granulation, de la poussière, qui est une fine poudre ayant un diamètre moyen de particule inférieur ou égal à 0,5 mm, contenant du fer et ayant une teneur en humidité de 0 à 20 % en masse, est de plus mélangée.

3. Procédé de production d'un matériau granulé selon la revendication 1 ou 2, dans lequel le gâteau déshydraté a une teneur en humidité de 20 % en masse ou plus et de moins de 30 % en masse.

4. Procédé de production de minerai fritté, le procédé comprenant :
une étape de combinaison consistant à combiner un matériau granulé produit en utilisant le procédé de production d'un matériau granulé selon l'une quelconque des revendications 1 à 3, une matière première contenant du fer, une matière première contenant CaO, et un combustible solide pour former une matière de base frittée ;
une étape de granulation consistant à ajouter de l'eau à la matière de base frittée et à granuler la matière de base frittée ; et
une étape de frittage consistant à fritter une forme granulée de la matière de base frittée dans une machine de frittage pour former un minerai fritté.
